# EUROPÄISCHE PATENTSCHRIFT

(11) **EP 2 011 750 B1**
(45) Veröffentlichungstag und Bekanntmachung des Hinweises auf die Patenterteilung: **20.01.2010**
(21) Anmeldenummer: 08009882.5
(22) Anmeldetag: 30.05.2008
(51) Int. Cl.: B65G 27/24, B06B 1/14

(54) **Vibrationslinearförderer**
Linear vibration feeder
Convoyeur linéaire à vibrations

(30) Priorität: 06.07.2007 DE 102007031639
(43) Veröffentlichungstag der Anmeldung: 07.01.2009
(73) Patentinhaber: Feintool Intellectual Property AG, 3250 Lyss (CH)
(72) Erfinder: Böger, Christian, 93049 Regensburg (DE); Edbauer, Franz, 93158 Teublitz (DE)
(74) Vertreter: Blaumeier, Jörg

(56) Entgegenhaltungen:
- WO-A-00/35787
- DE-A1-102005 041 915
- JP-A- 62 205 911
- JP-A- 63 017 716
- US-A- 4 795 025

## Beschreibung

Die Erfindung betrifft einen Vibrationslinearförderer umfassend eine Nutz- und eine Gegenmasse, die über jeweils wenigstens ein Federelement mit einer Bodenplatte schwingbeweglich verbunden sind, wie in DE 10 2005 041 915 A1 bereits beschrieben.

Solche Vibrationslinearförderer dienen der Förderung kleiner und kleinster Bauteile beispielsweise zu einem Montageautomaten, wo die Bauteile entweder bearbeitet oder verbaut werden. Das Arbeitsprinzip eines solchen Vibrationslinearförderers beruht darauf, dass eine Gegenmasse und eine Nutzmasse, Teil welcher eine Förderschiene ist, längst welcher die Bauteile bewegt werden, in eine gegenläufige Schwingbewegung gebracht werden, so dass es zu einer Mikrowurfbewegung der Bauteile auf der Förderschiene kommt. Die Nutz- und die Gegenmasse sind jeweils über entsprechende Federelemente, vornehmlich Blattfedern bzw. Blattfederpakete, mit der Bodenplatte, über die der Vibrationslinearförderer mit einem Drittgegenstand, beispielsweise einem Montagetisch, verbunden ist, schwingbeweglich verbunden. Als Antriebseinheit kommt üblicherweise ein Elektromagnet zum Einsatz, wobei zumeist der Magnetkern mit der ihn umgebenden Wicklung mit der Gegenmasse und der Magnetanker mit der Nutzmasse verbunden ist. Bei einer anliegenden Wechselspannung an der Wicklung kommt es zu einem in Abhängigkeit der Spannungsfrequenz wechselnden Magnetfeld, das auf den Anker wirkt, woraus letztlich die gegenläufige Schwingbewegung der beiden Massen resultiert.

Ein solcher Elektromagnet, der üblicherweise in einem Aufnahmeraum unterhalb der Nutzmasse zwischen dieser und der Bodenplatte angeordnet ist, ist jedoch relativ groß und benötigt deshalb relativ viel Raum, darüber hinaus ist er schwer.

Der Erfindung liegt damit das Problem zu Grunde, einen Vibrationslinearförderer anzugeben, der einen vereinfachten, kleinbauenden Antrieb aufweist.

Zur Lösung dieses Problems ist bei einem Vibrationslinearförderer der eingangs genannten Art erfindungsgemäß vorgesehen, dass zur Erzeugung der gegenläufigen Schwingbewegung an wenigstens einem Federelement wenigstens ein piezoelektrischer Aktor angeordnet ist, wobei der piezoelektrische Aktor an beiden Seiten an mit einem Federelement verbundenden Widerlagern aufgelagert ist.

Erfindungsgemäß kommt anstelle eines Elektromagneten ein piezoelektrischer Aktor zum Einsatz, der unmittelbar auf ein Federelement einwirkt, mithin an diesem angeordnet ist und nicht mit der Nutz- bzw. Gegenmasse verbunden ist. Vielmehr erfolgt hier über den piezoelektrischen Aktor eine schwingungserzeugende Kraftbeaufschlagung eines Federelements selbst, d. h., das Federelement wird in Abhängigkeit der ansteuerungsbedingten Formänderung des piezoelektrischen Aktors verformt, also gebogen. Der piezoelektrische Aktor wird über eine geeignete Wechselspannung angesteuert, wobei die Formänderung des Aktors bekanntlich spannungsabhängig ist bzw. mit der Spannung variiert. Der Aktor, z. B. ein handelsüblicher Piezoelementstapel, ist zwischen zwei Widerlager gespannt, so dass seine Wirkrichtung im Wesentlichen senkrecht zur Schwingrichtung des Federelements steht.

Nachdem derartige Aktoren sehr klein sind, ergeben sich keinerlei Platzprobleme bei der Integration derselben. Sie sind sehr leicht, d. h., das Gewicht des Vibrationslinearförderers wird hierdurch nur unwesentlich beeinflusst. Darüber hinaus sind piezoelektrische Aktoren sehr hochfrequent ansteuerbar, d. h., verglichen mit einem Elektromagneten können wesentlich höherfrequente Schwingungen erzeugt werden.

Zweckmäßigerweise ist an wenigstens einem Federelement der Nutzmasse und an wenigstens einem Federelement der Gegenmasse ein piezoelektrischer Aktor angeordnet. Hier werden also aktiv die Federelemente der Gegen- und der Nutzmasse zur Schwingungserzeugung verformt. Hinsichtlich der Phasenlage der jeweiligen Steuerspannungen kommt es darauf an, wie viele und wo die piezoelektrischen Aktoren angeordnet sind, d. h., auf welcher Seite des Linearförderers sie sich befinden und ob sie der Nutz- oder der Gegenmasse zugeordnet sind. Die Ansteuerung und die Anordnung des oder der Aktoren muss so ausgelegt sein, dass die mit den Aktoren gekoppelten Federelemente der Nutz- und der Gegenmasse jeweils geometrisch und/oder zeitlich gegengleich verformt werden, so dass sich eine gegenphasige Verformung ergibt. Je nach Ausgestaltung können also die mit den verschiedenen massenseitigen Federelementen gekoppelten piezoelektrischen Aktoren mit gleicher Phase oder mit invertierter Phase angesteuert werden.

Denkbar ist es natürlich auch, an jedem Federelement einen oder mehr als einen piezoelektrischen Aktor anzuordnen. Beispielsweise kann an beiden Längsenden eines Federelements jeweils ein piezoelektrischer Aktor angeordnet sein, wobei beide Aktoren simultan angesteuert werden, mithin also mit der gleichen Phase. Hierüber kann die Verformung des Federelements vergrößert werden, es kann also mithin eine größere Schwingungsweite erreicht werden.

Ein Federelement selbst ist zweckmäßigerweise als Blattfeder ausgebildet, insbesondere als ein aus mehreren Einzelfedern bestehendes Blattfederpaket. Solche flächigen Federelemente lassen zum einen eine einfache Anordnung eines piezoelektrischen Aktors zu, zum anderen ist mit ihnen auf einfache Weise eine lineare Schwingungsbewegung realisierbar. Nachdem üblicherweise vier Blattfederpakete verwendet werden, und die Aktoren an diesen außen- und innenseitig angeordnet werden können, sind maximal acht ausgezeichnete Positionen gegeben.

Um über einen piezoelektrischen Aktor bei einer Verformung desselben eine zur Verbiegung des Federelements führende Kraft auf das Federelement aufbringen bzw. in dieses einleiten zu können, arbeitet der Aktor erfindungsgemäß gegen zwei Widerlager, zwischen die er gesetzt oder gespannt ist. Zweckmäßigerweise ist ein erstes Widerlager im Bereich eines das Federelement an der Nutz-, der Gegenmasse oder der Bodenplatte halternden Befestigungselements, insbesondere einer Halteplatte, am Federelement angeordnet, oder das Widerlager wird von diesem Befestigungselement selbst gebildet, während ein zweites Widerlager an einer Position längs des Federelements angeordnet ist. Der piezoelektrische Aktor wird also zwischen zwei Widerlager, die ihrerseits fest mit dem Federelement verbunden sind, angeordnet bzw. gespannt. Das eine Widerlage ist vorzugsweise benachbart zur Befestigung des Federelements an der jeweiligen Masse oder der Bodenplatte angeordnet, also nahe einem lagefesten, weil nicht oder nur kaum gebogenem Ort längs des Federelements. Das andere Ende des Aktors ist an einem längs des Federelements positionierten Widerlager aufgelagert. Der piezoelektrische Aktor stützt sich also quasi am im wesentlichen lagefesten Widerlager ab und drückt bei einer Verformung, also einer längenmäßigen Ausdehnung, gegen dieses und gegen das andere Widerlager, woraus eine Biegebewegung des Federelements um eine Querachse erfolgt. Dabei kann das eine Widerlage von einem Befestigungselement, über das das Federelement direkt mit der Bodenplatte oder der jeweiligen Masse verbunden ist, gebildet sein, denkbar ist aber auch, dort ein separates Widerlager in Form eines Metallplättchens oder dergleichen vorzusehen.

Ein am Federelement angeordnetes Widerlager ist zweckmäßigerweise am Federelement angeklebt oder mit diesem auf jede beliebige andere Art und Weise fest verbunden. Der piezoelektrische Aktor, der natürlich ein entsprechendes kleinformatiges Gehäuse aufweist, ist fest zwischen den beiden Widerlagern eingespannt.

Weitere Vorteile, Merkmale und Einzelheiten der Erfindung ergeben sich aus dem im Folgenden beschrieben Ausführungsbeispiel sowie anhand der Zeichnungen. Dabei zeigen:
- Fig. 1: ein Prinzipdarstellung eines erfindungsgemäßen Vibrationslinearförderers, und
- Fig. 2: eine vergrößerte Ansicht zweier Federelemente mit darin angeordneten piezoelektrischen Aktoren.

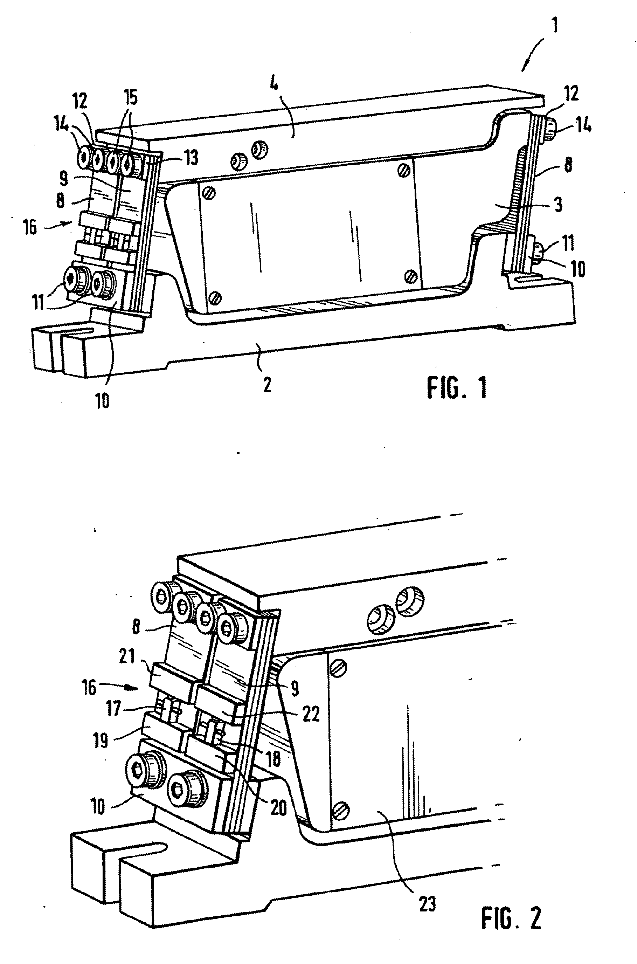

Fig. 1 zeigt einen erfindungsgemäßen Vibrationslinearförderer 1, umfassend eine Bodenplatte 2, mit der der Linearförderer 1 auf einem Montagetisch oder dergleichen befestigt wird. Gezeigt ist ferner eine Gegenmasse 3 sowie eine Nutzmasse 4, von der nur ein Teil gezeigt ist, nachdem auf die schienenartige Nutzmasse 4 noch die Förderschiene aufzusetzen ist, die bauteilspezifisch ausgelegt ist und längs welche die Bauteile bewegt werden. Die Gegenmasse 3 und die Nutzmasse 4 sind an ihren beiden Enden über jeweils ein Federelement 8, 9 mit der Bodenplatte 2 schwingbeweglich verbunden. Die beiden an den jeweiligen Enden befindlichen Federelemente sind nebeneinander angeordnet. Die Ausgestaltung ist dabei derart, dass die beiden Federelemente 8, über die die Gegenmasse mit der Bodenplatte 2 verbunden ist, nicht in Längsrichtung des Linearförderers 1 gesehen hintereinander, sondern versetzt zueinander angeordnet sind. Entsprechendes gilt für die beiden die Nutzmasse 4 mit der Bodenplatte 2 koppelnden Federelemente 9 von denen in Fig. 2 nur eines sichtbar ist, auch diese sind versetzt zueinander. Insgesamt ergibt sich eine gekreuzte Federelementanordnung, d. h., die Nutzmasse ist ausgehend von der Darstellung in Fig. 2 an linken Ende über ein rechts angeordnetes Federelement 9 mit der Bodenplatte 2 verbunden, am anderen Ende befindet sich das Federelement 9 links, während die Gegenmasse am in Fig. 2 gezeigten linken Ende über ein links angeordnetes Federelement 8 und am rechten Ende über das rechts angeordnete Federelement 8 mit der Bodenplatte 2 verbunden ist. Hierzu sind die Gegen- und die Nutzmasse 3, 4 entsprechend ausgebildet bzw. in ihrer Geometrie so gewählt, dass sich jeweilige Befestigungspositionen ergeben.

An jeder Seite sind die beiden Federelemente 8, 9 über ein gemeinsames plattenförmiges Befestigungselement 10 mit der Bodenplatte 2 verbunden, wozu entsprechende Befestigungsschrauben 11 dienen. Die jeweiligen anderen Enden der Federelemente 8, 9 sind über separate plattenförmige Befestigungselemente 12, 13 und entsprechende Befestigungsschrauben 14, 15 mit der Gegenmasse 3 bzw. der Nutzmasse 4 verbunden.

Um die Nutzmasse 4 und die Gegenmasse 3 in eine gegenläufige Schwingbewegung zu bringen, sind Antriebsmittel 16 in Form piezoelektrischer Aktoren 17, 18 vorgesehen, die an den Federelementen 8, 9 angeordnet sind und diese direkt beaufschlagen. In Fig. 2 sind die beiden links gezeigten Federelemente 8, 9 vergrößert dargestellt, die Anordnung gilt entsprechend für die beiden an der anderen Seite befindlichen Federelemente 8, 9, auch dort sind entsprechende Aktoren 17, 18 an den jeweiligen den entsprechenden Massen zugeordneten Federelementen 8, 9 angeordnet.

Jeder Aktor 17, 18 ist über ein erstes Widerlager 19, 20, das im gezeigten Beispiel benachbart zum plattenartigen Befestigungselement 10 angeordnet ist oder direkt auf diesem aufsitzt, sowie über ein zweites Widerlager 21, 22, das an einer Position längs eines Federelements 8, 9 angeordnet ist, aufgelagert bzw. zwischen diesen beiden Widerlagern verspannt. Die Widerlager 19, 20, 21, 22 können auf die Fläche des jeweiligen Federelements, das hier ersichtlich als Blattfeder oder Blattfederpaket ausgebildet, aufgeklebt sein, denkbar ist es auch, diese dort anzuschweißen.

Im gezeigten Beispiel sind die beiden Aktoren 17, 18 an der Außenseite der Federelemente 8, 9 aufgebracht. Es sei angenommen, dass an der gegenüberliegenden Seite die beiden dort angeordneten, nicht näher gezeigten Aktoren 17, 18 ebenfalls an der Außenseite der Federelemente 8, 9 angeordnet sind. D. h., das alle Federelemente unmittelbar über jeweils einen separat ansteuerbaren Aktor beaufschlagt werden können.

Um nun eine gegenläufige Schwingung von Nutzmasse 4 zur Gegenmasse 3 zu ermöglichen, ist es erforderlich, die Aktoren 17, 18 in bestimmter Weise anzusteuern. Ausgehend von der Konfiguration gemäß Fig. 1 mit über Kreuz angeordneten Federelementen 8 und 9 und außenseitig angeordneten Aktoren 17, 18 ist es erforderlich, dass für eine gegenläufige Bewegung die Federelemente 8 und die Federelemente 9 in jeweils entgegensetzte Richtung verformt werden. D. h., zwei benachbarte Federelemente 8, 9 müssen in entgegengesetzte Richtung gebogen werden. Dies führt dazu, dass zwangsläufig zwei benachbarte Aktoren 17, 18 mit invertierter Phase angesteuert werden müssen, um die gegenläufige Bewegung zu erwirken. Während sich der eine Aktor in seiner Länge dehnt, mithin also das jeweilige in Fig. 2 gezeigte Federelement in Folge seiner Auflagerung an den Widerlagern nach rechts verbiegt, muss der andere Aktor eine Verkürzung vornehmen, um eine Verbiegung in die andere Richtung zu ermöglichen. Gleichzeitig ist es erforderlich, dass der zu einem Aktorpaar gehörende zweite Aktor 17 oder 18 ebenfalls invertiert zum ersten Aktor 17 oder 18 angesteuert wird, bedingt durch die Anordnung an der Außenseite der rechten Federelemente 8, 9. Soll beispielsweise das links gezeigte Federelement 8 nach links gebogen werden, damit die Gegenmasse insgesamt nach links bewegt wird, so wird diese Biegebewegung über eine Längenänderung des am rechten Federelement 8 angeordneten, außenseitig befindlichen Aktors 17 erwirkt, der über die ansteuerungsbedingte Längung und seine Widerlagerauflagerung das rechte Federelement 8 nach links biegt, welcher Biegebewegung das linke Federelement 8 dann in Folge der Verkürzung des dortigen Aktors 17 folgt. Umgekehrt erfolgt die Ansteuerung der Aktoren 18 an den beiden Federelementen 9. Ausgehend vom beschriebenen Beispiel wird zwangsläufig das linke Federelement 9 nach rechts gebogen, was über den sich verlängernden Aktor 18 erfolgt. Gleichzeitig muss, damit auch das rechte Federelement 9 nach rechts gebogen werden kann, der dortige Aktor 18 verkürzt werden, muss also invertiert angesteuert werden.

Denkbar wäre es auch, beispielsweise die beiden rechts angeordneten Aktoren 17, 18 an die Innenseite der jeweiligen Federelemente 8, 9 zu setzen. Dann wäre keine invertierte Ansteuerung innerhalb eines Aktorpaares 17, 17 bzw. 18, 18 erforderlich, vielmehr könnten beide mit gleicher Phase der Steuerspannung angesteuert werden, da zum Verbiegen eines Federelements beide Aktoren gleichsinnig anzusteuern sind. Die Rückstellung erfolgt jeweils über die sich rückstellenden Federelemente. In entsprechender Weise können dann auch die Aktoren 17 an den Federelementen 8 simultan und gleichphasig angesteuert werden, wobei bei dieser Ausgestaltung dann nur eine Biegebewegung nach rechts bezüglich aller Federelemente möglich ist. Die Bewegung in die andere Richtung erfolgt immer über die gebogenen Federelemente selbst, die, wenn die Aktoren sie nicht mehr aktiv verbiegen, infolge der gespeicherten Rückstellkraft in die Ausgangsposition zurückfedern. Letztlich ist die Anordnung der Aktoren sowie deren Ansteuerung insoweit beliebig, als lediglich sichergestellt werden muss, dass über die entsprechende Ansteuerung eine gegenläufige Schwingbewegung zwischen Nutz- und Gegenmasse realisiert werden kann.

Im Bereich unterhalb der schienenförmig dargestellten Nutzmasse 4, in dem sich die Gegenmasse 3 erstreckt, ist im gezeigten Beispiel eine Abschlussplatte 23 vorgesehen, hinter welcher sich ein Aufnahmeraum für Ausgleichsgewichte findet, über die ein Massenabgleich zwischen Gegenmasse und Nutzmasse erfolgen kann. Dieser ist für einen ordnungsgemäßen Schwingebetrieb erforderlich, wobei der hier zur Verfügung stehende Bauraum ohne weiteres ausreicht. Insgesamt besteht die Möglichkeit, nachdem nur sehr klein bauende, leichte Aktoren zur Schwingungserzeugung verwendet werden, grundsätzlich einen leichteren Aufbau zu schaffen, nachdem die Masse des üblicherweise verwendeten Elektromagneten wegfällt.

Ferner besteht die Möglichkeit, an jedem Federelement 8, 9 auch mehrere, also wenigstens einen zweiten Aktor anzuordnen, wie auch die Möglichkeit besteht, als jeweiliges unteres Widerlager keine separaten Widerlagerplatten zu verwenden, sondern das plattenartige Befestigungselement 10 selbst hierzu zu nutzen.

Anstelle einer Anordnung der Federelemente über Kreuz ist es auch denkbar, diese linear hintereinander anzuordnen. Auch ist es nicht erforderlich, zwei Federelemente nebeneinander anzuordnen, vielmehr können die Massen auch "ineinander" angeordnet werden, d. h. dass z. B. die Nutzmasse über zwei außen liegende Federelemente gelagert ist, während die Gegenmasse über zwei dazwischen, also innerhalb liegender Federelemente gelagert ist. Alle vier Federelemente liegen hier auf einer Linie, also deckungsgleich hintereinander.

Grundsätzlich können Piezoaktoren auf jedem der vier Blattfederpakete auf der Außen- und/oder der Innenseite angeordnet werden. Bei vier Blattfedern gibt es somit acht Positionen, an denen die Aktoren platziert werden können. Bezüglich der benötigten Kraft ist bereits ein Piezoaktor je Masse ausreichend, also einer für die Nutz- und einer für die Gegenmasse. Entsprechend der gewählten Position/Anordnung der Aktoren muss die Phasenlage der jeweiligen Steuerspannung, über die ein Aktor betrieben wird, so gewählt werden, dass sich die Federelemente gleichphasig verformen.

## Patentansprüche

1. Vibrationslinearförderer (1) umfassend eine Nutzmasse (4) und eine Gegenmasse (3), die über jeweils wenigstens ein Federelement (8, 9) mit einer Bodenplatte (2) schwingbeweglich verbunden sind, **dadurch gekennzeichnet, dass** zur Erzeugung der gegenläufigen Schwingbewegung an wenigstens einem Federelement (8, 9) wenigstens ein piezoelektrischer Aktor (17, 18) angeordnet ist, wobei der piezoelektrische Aktor (17, 18) an beiden Seiten an mit einem Federelement (8, 9) verbundenen Widerlagern (19, 21, 20, 22) aufgelagert ist.

2. Vibrationslinearförderer nach Anspruch 1, **dadurch gekennzeichnet, dass** an wenigstens einem Federelement (9) der Nutzmasse (4) und an wenigstens einem Federelement (8) der Gegenmasse (3) ein piezoelektrischer Aktor (17, 18) angeordnet ist.

3. Vibrationslinearförderer nach Anspruch 2, **dadurch gekennzeichnet, dass** an allen Federelementen (8, 9) jeweils wenigstens ein piezoelektrischer Aktor (17, 18) angeordnet ist.

4. Vibrationslinearförderer nach einem der vorangehenden Ansprüche, **dadurch gekennzeichnet, dass** an einem Federelement (8, 9) an beiden Längsenden jeweils ein piezoelektrischer Aktor (17, 18) angeordnet ist, die beide simultan angesteuert werden.

5. Vibrationslinearförderer nach einem der vorangehenden Ansprüche, **dadurch gekennzeichnet, dass** ein Federelement (8, 9) eine Blattfeder, insbesondere ein aus mehreren Einzelfedern bestehendes Blattfederpaket ist.

6. Vibrationslinearförderer nach einem der vorangehenden Ansprüche, **dadurch gekennzeichnet, dass** ein erstes Widerlager (19, 20) im Bereich eines das Federelement (8, 9) an der Nutz- (4), der Gegenmasse (3) oder der Bodenplatte (2) halternden Befestigungselements (10), insbesondere einer Halteplatte, am Federelement (8, 9) angeordnet ist, oder von diesem Befestigungselement (10) selbst gebildet ist, während ein zweites Widerlager (21, 22) an einer Position längs des Federelements (8, 9) angeordnet ist.

7. Vibrationslinearförderer nach Anspruch 6, **dadurch gekennzeichnet, dass** ein am Federelement (8, 9) angeordnetes Widerlager (19, 21, 20, 22) daran angeklebt oder angeschweißt ist.

## Claims

1. A linear vibration feeder (1) comprising an effective mass (4) and a counter mass (3), which are connected in an oscillating manner via at least one spring element (8, 9) to a baseplate (2),
**characterised in that,**
in order to generate the contrary oscillating motion, at least one piezoelectric actor (17, 18) is disposed on at least one spring element (8, 9), wherein the piezoelectric actor (17, 18) is mounted at both sides on counter bearings (19, 21, 20, 22) connected to a spring element (8, 9).

2. The linear vibration feeder according to claim 1,
**characterised in that**
a piezoelectric actor (17, 18) is disposed on at least one spring element (9) of the effective mass (4) and on at least one spring element (8) of the counter mass (3).

3. The linear vibration feeder according to claim 2,
**characterised in that**
at least one piezoelectric actor (17, 18) is disposed respectively on all spring elements (8, 9).

4. The linear vibration feeder according to any one of the preceding claims,
**characterised in that**
a piezoelectric actor (17, 18) is disposed respectively at both longitudinal ends on a spring element (8, 9), both of which are driven simultaneously.

5. The linear vibration feeder according to any one of the preceding claims,
**characterised in that**
a spring element (8, 9) is a plate spring, in particular, a plate-spring packet consisting of several individual springs.

6. The linear vibration feeder according to any one of the preceding claims,
**characterised in that**
a first counter bearing (19, 20) is disposed on the spring element (8, 9) in the region of a mounting element (10) holding the spring element (8, 9) on the effective mass (4), the counter mass (3) or the baseplate (2), in particular, of a holding plate, or is itself formed by this mounting element (10), while a second counter bearing (21, 22) is disposed at a position along the spring element (8, 9).

7. The linear vibration feeder according to claim 6,
**characterised in that**
a counter bearing (19, 21, 20, 22) disposed on the spring element (8, 9) is glued or welded onto it.

## Revendications

1. Convoyeur linéaire à vibrations (1), comportant une masse utile (4) et une masse complémentaire (3), qui sont reliées chacune de manière oscillante à une semelle (2) par l'intermédiaire d'au moins un élément de ressort (8, 9), **caractérisé en ce que,** pour générer un mouvement d'oscillation en sens opposé, au moins un actionneur (17, 18) piézoélectrique est agencé sur au moins un élément de ressort (8, 9), ledit actionneur (17, 18) piézoélectrique étant monté sur les deux côtés sur des contre-butées (19, 21, 20, 22) reliées à un élément de ressort (8, 9).

2. Convoyeur linéaire à vibrations selon la revendication 1, **caractérisé en ce qu'**un actionneur (17, 18) piézoélectrique est agencé sur au moins un élément de ressort (9) de la masse utile (4) et sur au moins un élément de ressort (8) de la masse complémentaire (3).

3. Convoyeur linéaire à vibrations selon la revendication 2, **caractérisé en ce que** respectivement au moins un actionneur (17, 18) piézoélectrique est agencé sur tous les éléments de ressort (8, 9).

4. Convoyeur linéaire à vibrations selon l'une quelconque des revendications précédentes, **caractérisé en ce que** sur un élément de ressort (8, 9), au niveau des deux extrémités longitudinales, est disposé respectivement un actionneur (17, 18) piézoélectrique, tous deux étant activés simultanément.

5. Convoyeur linéaire à vibrations selon l'une quelconque des revendications précédentes, **caractérisé en ce qu'**un élément de ressort (8, 9) est un ressort à lames, en particulier un bloc-ressort constitué de plusieurs ressorts à lames individuels.

6. Convoyeur linéaire à vibrations selon l'une quelconque des revendications précédentes, **caractérisé en ce qu'**une première contre-butée (19, 20) est agencée sur l'élément de ressort (8, 9) dans la zone d'un élément de fixation (10), en particulier une plaque de fixation, par lequel l'élément de ressort (8, 9) est maintenu sur la masse utile (4), la masse complémentaire (3) ou la semelle (2), ou est formée elle-même par cet élément de fixation (10), alors qu'une deuxième contre-butée (21, 22) est agencée à un emplacement le long de l'élément de ressort (8, 9).

7. Convoyeur linéaire à vibrations selon la revendication 6, **caractérisé en ce qu'**une contre-butée (19, 21, 20, 22), agencée sur l'élément de ressort (8, 9), est collée ou soudée contre ce dernier.
